# EUROPÄISCHE PATENTSCHRIFT

(11) **EP 0 670 446 B1**
(45) Veröffentlichungstag und Bekanntmachung des Hinweises auf die Patenterteilung: **30.07.1997**
(21) Anmeldenummer: 95102398.5
(22) Anmeldetag: 21.02.1995
(51) Int. Cl.: F16L 9/08, B28B 21/56

(54) **Stahlbetonvortriebsrohr**
Reinforced concrete driving pipe
Tuyau de fonçage en béton armé

(30) Priorität: 23.02.1994 DE 4405699
(43) Veröffentlichungstag der Anmeldung: 06.09.1995
(73) Patentinhaber: Brust, Arnold, D-55743 Idar-Oberstein (DE)
(72) Erfinder: Brust, Arnold, D-55743 Idar-Oberstein (DE)
(74) Vertreter: Oppermann, Ewald, Dipl.-Ing.

(56) Entgegenhaltungen:
- FR-A- 2 330 942
- GB-A- 1 028 571
- GB-A- 1 213 752
- GB-A- 2 193 679

## Beschreibung

Die Erfindung bezieht sich auf ein Stahlbetonvortriebsrohr entsprechend dem Oberbegriff des Anspruchs 1.

Stahlbetonvortriebsrohren kommt eine zunehmende Bedeutung zu, weil sie in geschlossener Bauweise, d.h. ohne offenen Rohrgraben, verlegt werden können, was dem Wunsch nach möglichst die vorhandenen urbanen Strukturen nicht störenden Rohrverlegungen entgegenkommt. Durch die geschlossene Bauweise werden die Belastungen für Verkehrsteilnehmer, Anwohner, Bebauung, chenbewuchs und Umwelt durch Erschütterungen, Verkehrsbehinderungen und Lärm wesentlich verringert. Dementsprechend hat sich das Vortriebseinpressen von Stahlbetonvortriebsrohren mit gleichzeitigem Abbau des sogenannten Gebirges an der Ortsbrust zu einer vielseitigen und in weiten Bereichen anwendbaren Technik für begehbare Rohre entwickelt.

Da Stahlbetonvortriebsrohre beim Transport, Auf- und Abladen, Rohrvortrieb und während des Betriebes vielfältigen inneren und äußeren Beanspruchungen ausgesetzt sind und bei den erdverlegten Rohrleitungen Schäden nur schwer zu erkennen und zu beheben sind, kommt es bei der Herstellung der Stahlbetonvortriebsrohre besonders darauf an, eine hohe Maßhaltigkeit, eine hohe Werkstoffqualität, eine gute Übertragbarkeit und Einleitbarkeit der Vortriebspreßkräfte von der Presse auf das Rohr und von Rohr zu Rohr und das alles natürlich bei einer möglichst wirtschaftlichen Herstellbarkeit zu erzielen.

Bisher wurden Stahlbetonvortriebsrohre im waagerechten Schleuderverfahren hergestellt. Hierbei wird in eine um eine waagerechte Achse rotierend angetriebene hohlzylindrische Stahlform durch ein sogenanntes Schnorchelband Beton eingeführt, der dann durch eine entsprechend hohe Drehzahl der Form wie in einer Zentrifuge verteilt und verdichtet wird. Anschließend wird die Form mehrere Stunden gelagert, wobei die Betonaushärtung durch Bedampfung beschleunigt werden kann. Das fertige Rohr kann erst nach etwa sechs bis sieben Stunden aus der Form entschalt werden. Neben der langen Herstellungsdauer bestehen weitere Nachteile des bekannten Verfahrens insbesondere darin, daß durch das Zentrifugieren Entmischungen im Beton auftreten können, was zu ungleichmäßigem Gefüge und Ansammlung grober Teile an der Rohraußenseite führt, und daß eine rauhe ungleichförmige Rohrinnenwandfläche resultiert. Auch die Maßhaltigkeit der so hergestellten Stahlbetonvortriebsrohre läßt häufig zu wünschen übrig.

In einer von mir zeitgleich eingereichten Patentanmeldung habe ich ein Herstellungsverfahren und eine zur Verfahrensdurchführung besonders geeignete Vorrichtung vorgeschlagen, das bzw. die eine wirtschaftliche Herstellung sehr maßhaltiger und qualitativ hochwertiger Stahlbetonvortriebsrohre ermöglicht. Hierbei gelang das bisher nur für die Herstellung von fenstahlbetonrohren eingesetzte bzw. einsetzbare senkrecht beitende Radialpreßverfahren zur Anwendung. Das neue lungsverfahren und die verfahrensgemäß eingesetzte neue Vorrichtung lassen sich jedoch für Stahlbetonvortriebsrohre der üblichen, für die waagerechte Herstellung im Schleuderverfahren gebräuchlichen Konstruktion nicht ohne weiteres einsetzen.

Der Erfindung liegt daher die Aufgabe zugrunde, ein Stahlbetonvortriebsrohr entsprechend dem Oberbegriff des Anspruchs 1 bereitzustellen, das alle vorstehenden Anforderungen bezüglich Maßhaltigkeit, Qualität und Vortriebsbelastbarkeit erfüllt und zudem wirtschaftlich im senkrecht arbeitenden Radialpreßverfahren herstellbar ist.

Die gestellte Aufgabe wird durch die kennzeichnenden Merkmale des Anspruchs 1 gelöst. Vorteilhafte Weiterbildungen der Erfindung sind in den Unteransprüchen 2 bis 7 angegeben und nachstehend ebenfalls erläutert.

Das erfindungsgemäße Stahlbetonvortriebsrohr zeichnet sich insbesondere durch die wenigstens drei Anschlagvorsprünge aus, die einerseits bei der Rohrherstellung eine sichere und das untere Ende der Stahlmanschette nicht belastende Auflagerung des Bewehrungskorbes und der daran befestigten hohlzylindrischen Stahlmanschette sowie schließlich des gesamten Vortriebsrohres vor und während des Betoneinfüllens in die senkrechte Schalung ermöglichen, und die andererseits bei der axialen Vortriebsbelastung durch die Vortriebspressen beim Einbau des Rohres die Preßkräfte wenigstens teilweise aufnehmen können. Weiterhin ist durch die wenigstens drei Anschlagvorsprünge eine definierte Lage der die Rohrstirnfläche innerhalb der Stahlmanschette erzeugenden Plattform gegeben.

Vorzugsweise sind die drei Anschlagvorsprünge entsprechend dem Anspruch 2 als einteiliger Stahlring ausgebildet. Ein solcher Stahlring ist noch besser geeignet, die bei dem Rohreinbau, d.h. beim Rohrvortrieb auftretenden hohen Preßkräfte aufzunehmen und umfänglich gleichmäßig Zu verteilen. Das erlaubt eine exakte Dosierung der jeweils erforderlichen Preßkräfte, was besonders bei Kurven- oder Gradientvortrieben von Vorteil ist. Wird der Einbau von Zwischenpreßstationen erforderlich, kann man die Pressen ohne zusätzliche Sicherungsmaßnahmen direkt am Stahlring des Rohrendes ansetzen. Durch die gleichmäßige Kraftverteilung am Stahlring wird auch verhindert, daß benachbarte Betonbereiche insbesondere an den Rändern unter Preßkrafteinwirkung abplatzen können. Da der Stahlring zweckmäßig mit zwei Kehlnähten in die Stahlmanschette dicht eingeschweißt wird, kann auf eine bauseits anzubringende zusätzliche Dichtung verzichtet werden, weil das Rohrstirnende bereits hinreichend durch den Stahlring abgedichtet wird.

Vorteilhaft ist der Stahlring entsprechend dem Anspruch 3 ausgebildet, gebildet, wonach der Stahlring selbst die Rohrstirnfläche Es liegt auf der Hand, daß bei einer derartigen Ausbildung des umfänglich in die Stahlmuffe eingeschweißten Stahlrings die vorstehend hervorgehobenen Vorteile in noch verstärktem Maße eintreten. Dies gilt auch dann, wenn der Stahlring entsprechend Anspruch 4 aus einzelnen Ringsektoren zusammengeschweißt ist. Diese Maßnahme hat den Vorteil, daß der über beträchtliche Durchmesser verfügende Stahlring nicht unter hohem Materialverlust aus einer Blechplatte ausgeschnitten werden muß.

Werden anstelle eines umfänglich an die Innenwandfläche der Stahlmanschette angeschweißten Stahlrings nur wenigstens drei Anschlagvorsprünge an der Stahlmanschette befestigt, so können auch diese entsprechend Anspruch 5 durch Anschweißen befestigt sein.

Durch die Maßnahmen des Anspruchs 6 bilden der Bewehrungskorb, der Stahlring und die Stahlmanschette eine miteinander verschweißte Einheit, wodurch eine sehr schubsteife Verbindung von Beton- und Stahlkomponenten des Stahlbetonvortriebsrohres sichergestellt ist. Auf die sonst üblichen zusätzlichen Schubsicherungen, wie z.B. angeschweißte Kopfbolzendübel, kann deshalb verzichtet werden. Durch die feste Verbindung der Stahlmanschette und/oder des Stahlrings mit dem Bewehrungskorb durch die im Anspruch 6 erwähnten Ankerstäbe wird auch eine sichere Zentrierung dieser Teile erreicht, so daß der Bewehrungskorb während des Herstellvorganges in der für die Belastbarkeit des fertigen Stahlbetonvortriebsrohres besten Stellung fixiert wird. Durch diese Maßnahmen ist auch sichergestellt, daß die notwendigen Betonüberdeckungen exakt eingehalten werden können, womit eine größere Sicherheit beim Schutz der Bewehrung vor Korrosion gegeben ist.

Zweckmäßig sind die im Anspruch 6 erwähnten Ankerstäbe gemäß Anspruch 7 als Flachstäbe ausgebildet und in einem Winkel von etwa 45° zur Rohrachse angeordnet.

Weitere Einzelheiten der Erfindung werden nachfolgend anhand der Zeichnungen näher erläutert. Darin zeigen in schematischer Darstellungsweise
- Fig. 1: einen abgebrochenen Längsschnitt durch zwei benachbarte Rohrenden mit an der Stahlmanschette des einen Rohrendes befestigten Anschlagvorsprüngen und
- Fig. 2: einen der Fig. 1 ähnlichen Längsschnitt durch zwei benachbarte Rohrenden, jedoch bei Ausbildung der Anschlagvorsprünge als einteiliger Stahlring.

Aus den Zeichnungen sind zwei Stahlbetonvortriebsrohre 1 in der Stellung ersichtlich, die von zwei benachbarten Rohren während des Vortriebs eingenommen wird. Zur Darstellungsvereinfachung ist jeweils nur ein Querschnitt durch die Wandung der Rohrenden gezeigt, wobei auch auf die Anbringung von Schnittschraffuren verzichtet wurde. Das links dargestellte Rohr 1 ist mit seinem sogenannten Spitzende dargestellt, während das rechts gezeigte Rohr 1 mit seinem Muffenende, d.h. mit der Stahlmanschette 2 dargestellt ist. Das Spitzrohrende greift in die Stahlmanschette 2 ein. Beim Rohrvortrieb befindet sich auf der Stufe des kleinsten Durchmessers des Spitzendes eine um den Rohrumfang umlaufende und der Stahlmanschette 2 von innen anliegende Dichtung, beispielsweise in Form einer Keil-Gleitringdichtung. Ausserdem kann zwischen den beiden benachbarten parallelen Stirnflächen 3 und 4 beim Vortrieb eine den Druck verteilende Weichholzscheibe (ebenfalls nicht dargestellt) angeordnet sein. Wie erkennbar ist, steht die Stahlmanschette 2 muffenartig über die Stirnfläche 3 vor und bildet mit einem inneren Teilbereich die Umfangsfläche des Betonrohrs 1. Wie ersichtlich ist, entspricht der Außendurchmesser der Stahlmanschette 2 etwa dem Außendurchmesser des aus Beton bestehenden Rohrbereichs.

In die aus Beton bestehende Wandung des Rohres ist der zur Rohrachse konzentrisch angeordnete Bewehrungskorb, der allgemein mit der Bezugszahl 5 bezeichnet ist, eingebettet. An der Innenwandfläche 6 der Stahlmanschette 2 sind mehrere über den Rohrumfang gleichmäßig verteilte Ankerstäbe 7 aus Stahl angeschweißt, die als Flachstäbe ausgebildet und in einem Winkel von etwa 45° zur Rohrachse angeordnet sind. Die Ankerstäbe 7 sind mit dem Bewehrungskorb 5 fest verbunden, vorzugsweise durch Schweißung. Auf diese Weise wird der Bewehrungskorb schon für das Herstellungsverfahren des Betonrohres konzentrisch in der Schalung fixiert, wobei die notwendigen Betonüberdeckungen allseits sichergestellt sind.

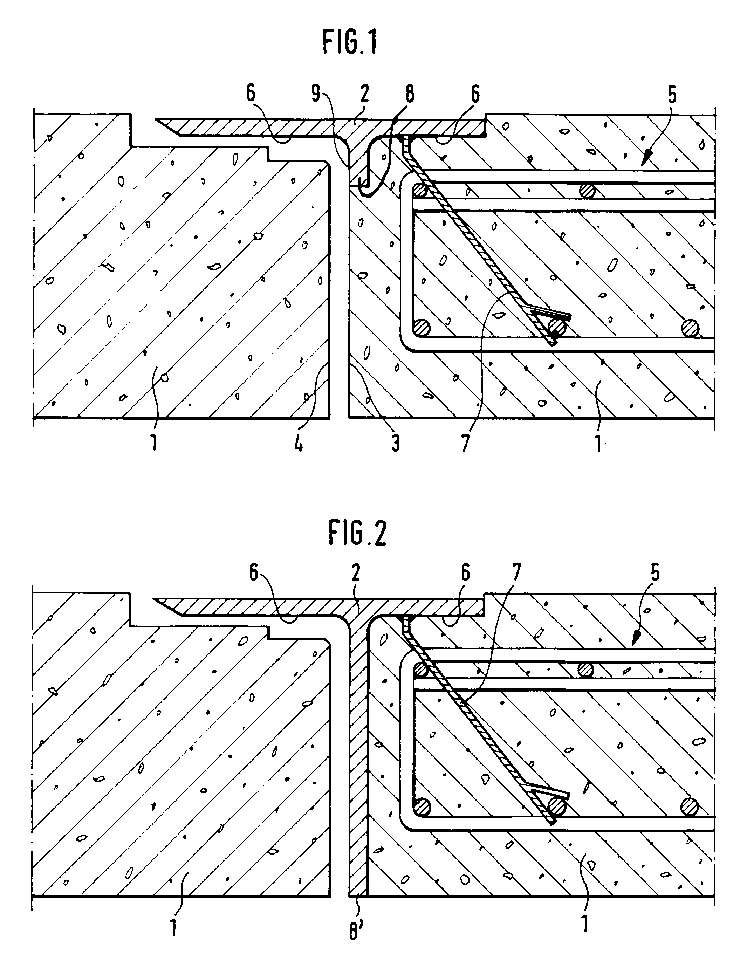

Beim Ausführungsbeispiel gemäß Fig. 1 sind an der Innenwandfläche 6 der Stahlmanschette 2 umfänglich gleichmäßig verteilt mindestens drei Anschlagvorsprünge 8 durch Anschweißen befestigt. Falls die Mindestanzahl von drei Anschlagvorsprüngen vorgesehen ist, besitzen diese voneinander einen Winkelabstand von 120°. Die Anschlagvorsprünge 8 befinden sich in einer zur Rohrachse senkrecht ausgerichteten Ebene, und ihre zum äußeren Ende der Stahlmanschette 2 gekehrten Anschlagflächen 9 sind bündig in die Rohrstirnfläche 3 eingebettet.

Die Anschlagvorsprünge 8 können auch als einteiliger Stahlring ausgebildet sein, der die in Fig. 1 dargestellte radiale Erstreckung aufweist. Dabei kann der Stahlring auch aus einzelnen Ringsektoren zusammengeschweißt sein.

Bei dem Ausführungsbeispiel gemäß Fig. 2 ist der Stahlring 8' als ebene Ringplatte ausgebildet, deren Außendurchmesser etwa dem Innendurchmesser der Stahlmanschette 2 und deren Innendurchmesser dem Innendurchmesser des Betonrohres 1 entspricht. Hierbei bildet der Stahlring selbst die Rohrstirnfläche bzw. Anschlagfläche. Bei dieser Ausführungsform kann die Ringplatte 8' aus einzelnen Ringsektoren zusammengeschweißt sein. Die Befestigung der Ringplatte 8' an der Innenwandfläche 6 der Stahlmanschette 2 erfolgt durch Schweißung, wie die in dieser Figur angedeuteten Kehlnähte veranschaulichen. Bei dieser Ausführungsform überträgt der Stahlring 8' alle in axialer Richtung eingeleiteten Kräfte auf das mit der Stahlmanschette 2 versehene Stahlbetonvortriebsrohr 1. Es ist ersichtlich, daß auf diese Weise und in Verbindung mit den zwischen der Stahlmanschette 2 und dem Bewehrungskorb 5 eingeschweißten Ankerstäben 7 ein sehr belastbares Muffenende des Stahlbetonvortriebsrohres erzielt wird. Gleichzeitig eröffnet diese Anordnung den hoch einzuschätzenden Fertigungsvorteil der Anwendung des senkrecht arbeitenden Radialpreßverfahrens.

Als mittelbare Folge des durch die Erfindung ermöglichten besonderen Herstellungsverfahrens ergibt sich ein sehr maßhaltiges Stahlbetonvortriebsrohr hoher Qualität, das problemlos eingepreßt werden kann. Bezüglich der in den Figuren gewählten Darstellung verläuft die Vortriebsrichtung von links nach rechts.

## Patentansprüche

1. Stahlbetonvortriebsrohr von über seine Länge durchgehend hohlzylindrischer vorsprungsloser Gestalt, mit einem konzentrisch in die Rohrwandung im Beton eingebetteten Bewehrungskorb (5) und einer an einem Rohrende angebrachten und an dem Bewehrungskorb befestigten hohlzylindrischen Stahlmanschette (2), die axial über die betreffende senkrecht zur Rohrachse ausgerichtete Rohrstirnfläche (3) übersteht, einen dem Rohraußendurchmesser entsprechenden Außendurchmesser aufweist und zur muffenartigen Aufnahme des Spitzrohrendes eines Anschlußrohres bestimmt ist, **dadurch gekennzeichnet**, daß an der Innenwandfläche (6) der Stahlmanschette (2) umfänglich gleichmäßig verteilt mindestens drei Anschlagvorsprünge (8) befestigt sind, die sich in einer zur Rohrachse senkrecht ausgerichteten Ebene befinden und deren zum äußeren Ende der Stahlmanschette (2) gekehrten Anschlagflächen (9) bündig in die Rohrstirnfläche (3) eingebettet sind.

2. Stahlbetonvortriebsrohr nach Anspruch 1, **dadurch gekennzeichnet**, daß die Anschlagvorsprünge als einteiliger Stahlring (8') ausgebildet sind.

3. Stahlbetonvortriebsrohr nach Anspruch 2, **dadurch gekennzeichnet**, daß der Stahlring (8') eine ebene Ringplatte ist, deren Außendurchmesser etwa dem Innendurchmesser der Stahlmanschette (2) und deren Innendurchmesser dem Innendurchmesser des Betonrohres (1) entspricht, wobei der Stahlring (8') die Rohrstirnfläche bildet.

4. Stahlbetonvortriebsrohr nach Anspruch 2 oder 3, **dadurch gekennzeichnet**, daß der Stahlring (8') aus einzelnen Ringsektoren zusammengeschweißt ist.

5. Stahlbetonvortriebsrohr nach mindestens einem der Ansprüche 1 bis 4, **dadurch gekennzeichnet**, daß die Anschlagvorsprünge (8) bzw. der Stahlring (8') umfänglich an die Innenwandfläche (6) der Stahlmanschette (2) angeschweißt sind.

6. Stahlbetonvortriebsrohr nach mindestens einem der Ansprüche 1 bis 5, **dadurch gekennzeichnet**, daß die Stahlmanschette (2) und/oder ggf. der Stahlring (8') durch mehrere über den Rohrumfang gleichmäßig verteilte eingeschweißte Ankerstäbe (7) aus Stahl mit dem Bewehrungskorb (5) fest verbunden sind/ist.

7. Stahlbetonvortriebsrohr nach Anspruch 6, **dadurch gekennzeichnet**, daß die Ankerstäbe (7) als Flachstäbe ausgebildet und in einem Winkel von etwa 45° angeordnet sind.

## Claims

1. Reinforced concrete driving pipe of hollow cylindrical form without projections throughout its length, comprising a reinforcement cage (5) embedded in the concrete concentrically into the pipe wall and a hollow cylindrical steel collar (2), fitted to one end of the pipe and fixed to the reinforcement cage, which (collar) projects axially beyond the respective pipe end face (3) orientated perpendicularly to the pipe axis, has an external diameter corresponding to the pipe external diameter and is intended for receiving as a socket the spigot end of a connected pipe, characterized in that to the inner wall face (6) of the steel collar (2) at least three abutment projections (8) are fixed, uniformly distributed around the circumference, which are situated in a plane orientated perpendicular to the pipe axis, and the abutment surfaces (9) of which, facing towards the outer end of the steel collar (2), are embedded flush into the pipe end face (3).

2. Reinforced concrete driving pipe according to claim 1, characterized in that the abutment projections are formed as one integral steel ring (8').

3. Reinforced concrete driving pipe according to claim 2, characterized in that the steel ring (8') is a flat annular plate, the external diameter of which corresponds approximately to the internal diameter of the steel collar (2) and the internal diameter of which corresponds to the internal diameter of the concrete pipe (1), the steel ring (8') forming the pipe end face.

4. Reinforced concrete driving pipe according to claim 2 or 3, characterized in that the steel ring (8') is welded together from individual ring segments.

5. Reinforced concrete driving pipe according to at least one of claims 1 to 4, characterized in that the abutment projections (8) or the steel ring (8') respectively are welded circumferentially to the inner wall face (6) of the steel collar (2).

6. Reinforced concrete driving pipe according to at least one of claims 1 to 5, characterized in that the steel collar (2) and/or, where applicable, the steel ring (8') is/are firmly connected to the reinforcement cage (5) by a plurality of welded-in anchor bars (7), uniformly distributed about the pipe circumference.

7. Reinforced concrete driving pipe according to claim 6, characterized in that the anchor bars (7) are formed as flat bars and are disposed at an angle of approximately 45°.

## Revendications

1. Tube de fonçage en béton armé, de forme cylindrique creuse continue sur sa longueur et dépourvue de saillies, comprenant un treillis d'armature (5) noyé dans le béton concentriquement dans la paroi du tube, et une manchette d'acier (2) cylindrique creuse montée à une extrémité du tube et fixée sur le treillis d'armature, ladite manchette dépassant axialement au-delà de la surface frontale concernée du tube dirigée perpendiculairement à l'axe du tube, présentant un diamètre extérieur qui correspond au diamètre extérieur du tube et étant destinée à recevoir à la manière d'un manchon l'extrémité effilée d'un tube de raccordement, caractérisé en ce que, sur la surface de paroi intérieure (6) de la manchette d'acier (2), sont fixées au moins trois saillies de butée (8) réparties de manière égale sur la périphérie, lesdites saillies étant situées dans un plan orienté perpendiculairement à l'axe du tube, et leurs surfaces de butée (9) tournées vers l'extrémité extérieure de la manchette d'acier (2) sont noyées en affleurement dans la surface frontale du tube (3).

2. Tube de fonçage en béton armé, selon la revendication 1, caractérisé en ce que les saillies de butée sont formées comme une bague d'acier d'une seule pièce (8').

3. Tube de fonçage en béton armé selon la revendication 2, caractérisé en ce que la bague d'acier (8') est une plaque annulaire plane, dont le diamètre extérieur correspond approximativement au diamètre intérieur de la manchette d'acier (2), et dont le diamètre intérieur correspond au diamètre intérieur du tube en béton (1), la bague d'acier (8') formant la face frontale du tube.

4. Tube de fonçage en béton armé selon l'une ou l'autre des revendications 2 ou 3, caractérisé en ce que la bague d'acier (8') est réalisée par soudage de secteurs annulaires individuels ensemble.

5. Tube de fonçage en béton armé selon l'une des revendications 1 à 4, caractérisé en ce que les saillies de butée (8), ou la bague d'acier (8') est/sont soudées sur la périphérie sur la surface de paroi intérieure (6) de la manchette d'acier (2).

6. Tube de fonçage en béton armé selon l'une des revendications 1 à 5, caractérisé en ce que la manchette d'acier (2) et/ou le cas échéant la bague d'acier (8') est/sont solidairement reliées au treillis d'armature (5) au moyen de plusieurs tiges d'ancrage (7) en acier, soudées et régulièrement réparties à la périphérie du tube.

7. Tube de fonçage en béton armé selon la revendication 6, caractérisé en ce que les tiges d'ancrage (7) sont réalisées sous forme de tiges aplaties et agencées sous un angle d'environ 45°.
